# EUROPEAN PATENT APPLICATION

(11) **EP 4 585 054 A1**
(43) Date of publication of application: **16.07.2025**
(21) Application number: 22955469.6
(22) Date of filing: 21.09.2022
(51) Int. Cl.: A23L 33/00, A23L 33/115

(54) **NUTRITIONAL COMPOSITION FOR ALZHEIMER'S DISEASE POPULATION OR HIGH-RISK POPULATION, AND PREPARATION METHOD THEREFOR**

(30) Priority: 18.08.2022 CN 202210995259
(71) Applicant: Hainan Xingzheng Nutrition Engineering Co., Ltd, Haikou, Hainan 570311 (CN)
(72) Inventor: CHENG, Guo, Chengdu, Sichuan 610065 (CN); ZHANG, Lin, Chengdu, Sichuan 610065 (CN); ZHANG, Lingli, Chengdu, Sichuan 610065 (CN)
(74) Representative: Altmann Stößel Dick Patentanwälte PartG mbB
(86) International application number: PCT/CN2022/120248
(87) International publication number: WO 2024/036693

(57) **Abstract**

A nutritional composition for an Alzheimer's disease population or a high-risk population, prepared from the following raw materials in parts by weight: 170-300 parts of proteinaceous substances, 85-250 parts of fatty substances, 450-770 parts of carbohydrates, 10-155 parts of dietary fiber substances, 1.2-3.5 parts of trace minerals, 47-180 parts of macro minerals, 2.0-8.3 parts of vitamins, 0.1-1.0 parts of taurine, 0.05-0.5 parts of L-carnitine, and 0.9-1.0 parts of lactoferrin. The composition is rich in high-quality animal and plant proteins, fatty acids, various vitamins, minerals, and water-soluble dietary fibers, is easy to digest and absorb, has remarkable effects in improving the body function of an Alzheimer's disease population or a high-risk population and slowing down the occurrence and development of Alzheimer's disease, and is suitable for an Alzheimer's disease population or a high-risk population to eat.

## Description

### Technology of the invention

The present invention belongs to the field of food technology, and specifically relates to a nutritional composition for individuals with Alzheimer's disease or those at high risk, as well as a preparation method therefor.

### Background of the invention

Alzheimer's disease (AD) is the most common neurodegenerative disease, accounting for approximately 80% of dementia cases in older adults. Its risk increases with age. Currently, it affects over 50 million people worldwide, and it is projected to affect 150 million people by 2050. The primary pathological features of AD are senile plaques formed by the aggregation of β-amyloid protein (Aβ) and neurofibrillary tangles caused by excessive phosphorylation of tau protein. With the intensifying global population aging, the social, economic, and public health issues brought by AD are increasingly prominent. Due to the complexity of AD etiology, there is currently no unified and definitive conclusion on the pathogenesis of AD. It has been shown that approximately 35% of dementia cases are attributed to unhealthy lifestyles, and epidemiological studies further suggest that dietary components and dietary structure play a significant role in the prevention and treatment of AD. Consequently, focusing on dietary nutrients to devise effective strategies for preventing and delaying the onset of AD has emerged as one of the hot research directions in recent years.

In view of this, it is of great significance to provide a nutritional composition that is reasonably configured with nutrients, easy to digest and absorb, and helps improve the physical function of individuals with Alzheimer's disease or high-risk groups, thereby delaying the occurrence and development of AD. However, there are currently no reports on health foods specifically targeted at individuals with Alzheimer's disease or high-risk groups.

### Content of the invention

To address the above issues, the present invention provides a nutritional composition for individuals with Alzheimer's disease or those at high risk, which is prepared from the following raw materials in the indicated mass ratios:
170-300 parts of proteinaceous substances, 85-250 parts of fatty substances, 450-770 parts of carbohydrates, 10-155 parts of dietary fiber substances, 1.2-3.5 parts of trace minerals, 47-180 parts of major minerals, 2.0-8.3 parts of vitamins, 0.1-1.0 parts of taurine, 0.05-0.5 parts of L-camitine, and 0.9-1.0 parts of lactoferrin.

Further, the proteinaceous substances include any one or more of whey protein, soy protein, and casein;
the fatty substances include any one or more of rapeseed oil, sunflower seed oil, and medium-chain triglycerides; the rapeseed oil is low erucic acid rapeseed oil.

Further, the dietary fiber substances include galactooligosaccharides and/or fructooligosaccharides;
the carbohydrates include maltodextrin and/or corn syrup; the corn syrup is solid corn syrup.

Further, the trace minerals include any one or more of copper sulfate, ferric pyrophosphate, manganese sulfate, sodium selenite, zinc citrate, and potassium iodide;
the major minerals include any one or more of tricalcium phosphate, calcium carbonate, magnesium carbonate, potassium chloride, potassium citrate, and sodium citrate.

Further, the vitamins include any one or more of L-ascorbic acid sodium salt, dl-α-tocopheryl acetate, niacinamide, calcium D-pantothenate, pyridoxine hydrochloride, thiamine hydrochloride, vitamin A palmitate, riboflavin, folic acid, phytomenadione, D-biotin, cholecalciferol, and cyanocobalamin.

Further, it is prepared from following raw materials in the indicated mass ratios:
190-240 parts of proteinaceous substances, 110-250 parts of fatty substances, 450-580 parts of carbohydrates, 40-80 parts of dietary fiber substances, 1.5-3.0 parts of trace minerals, 50-100 parts of major minerals, 3-7 parts of vitamins, 0.2-0.6 parts of taurine, 0.1-0.3 parts of L-camitine, and 0.9-1.0 parts of lactoferrin;
the protein substance is composed of whey protein, soy protein, and casein in a mass ratio of 15-35:37-90:80-161;
the fatty substance is the microcapsulated vegetable oil powder made from low erucic acid canola oil, sunflower oil, medium chain triglycerides, and edible carriers in a mass ratio of 22-45:45-80:18-38:25-65;
the carbohydrate is composed of maltodextrin and solid corn syrup in a mass ratio of 300-400:120-200;
the dietary fiber substance is composed of galactooligosaccharides and fructooligosaccharides in a mass ratio of 20-50:20-30;
the trace minerals are composed of copper sulfate, ferric pyrophosphate, manganese sulfate, sodium selenite, zinc citrate, potassium iodide, and edible carriers in a mass ratio of 0.02:0.25-0.35:0.03-0.04:0.0008-0.001:0.15-0.2:0.0015-0.0025:1.3-2.0;
the major minerals are composed of tricalcium phosphate, calcium carbonate, magnesium carbonate, potassium chloride, potassium citrate, sodium citrate, and edible carriers in a mass ratio of 12-16:10-14:4-6:7-10:9-11:15-16:3-7;
the vitamins are composed of L-ascorbic acid sodium salt, dl-α-tocopheryl acetate, niacinamide, calcium D-pantothenate, pyridoxine hydrochloride, thiamine hydrochloride, vitamin A palmitate, riboflavin, folic acid, phytomenadione, D-biotin, cholecalciferol, cyanocobalamin, and edible carriers in a mass ratio of 1-2:0.3-0.4:0.15-0.2:0.06-0.1:0.018-0.03:0.03-0.04:0.018-0.03:0.02-0.03:0.002-0.004:0.0009-0. 001:0.0002-0.0003:0.0001-0.0003:0.00003-0.00005:1.5-4.

Further, it is prepared from following raw materials in the indicated mass ratios:
205 parts of proteinaceous substances, 223.6 parts of fatty substances, 450 parts of carbohydrates, 50 parts of dietary fiber substances, 1.8 parts of trace minerals, 60 parts of major minerals, 4 parts of vitamins, 0.5 parts of taurine, 0.1 parts of L-carnitine, and 1.0 parts of lactoferrin;
the protein substance is composed of whey protein, soy protein, and casein in a mass ratio of 25:80:100;
the fatty substance is the microcapsulated vegetable oil powder made from low erucic acid canola oil, sunflower oil, medium chain triglycerides, and edible carriers in a mass ratio of 45: 80: 38:60.6;
the carbohydrate is composed of maltodextrin and solid corn syrup in a mass ratio of 300:150;
the dietary fiber substance is composed of galactooligosaccharides and fructooligosaccharides in a mass ratio of 20:30;
the trace minerals are composed of copper sulfate, ferric pyrophosphate, manganese sulfate, sodium selenite, zinc citrate, potassium iodide, and edible carriers in a mass ratio of 0.02:0.25:0.03:0.0008:0.15:0.002:1.3;
the major minerals are composed of tricalcium phosphate, calcium carbonate, magnesium carbonate, potassium chloride, potassium citrate, sodium citrate, and edible carriers in a mass ratio of 12:10:4:7:9:15:3;
the vitamins are composed of L-ascorbic acid sodium salt, dl-α-tocopheryl acetate, niacinamide, calcium D-pantothenate, pyridoxine hydrochloride, thiamine hydrochloride, vitamin A palmitate, riboflavin, folic acid, phytomenadione, D-biotin, cholecalciferol, cyanocobalamin, and edible carriers in a mass ratio of 1.3:0.4:0.15:0.06:0.02:0.03:0.02:0.02:0.002:0.001:0.0003:0.0002:0.00003:2.0.

The present invention also provides a method for preparing the nutritional composition mentioned above, which comprises the following steps:
1) The raw materials are weighed according to the pre-determined ratio;
2) Taurine, L-camitine, and lactoferrin are mixed and stirred at 30 rpm for 15 min to obtain premix a; vitamins and trace minerals are mixed and stirred at 30 rpm for 30 min to obtain premix b; major minerals and dietary fiber substances are mixed and stirred at 30 rpm for 40 min to obtain premix c; proteinaceous substances are stirred at 30 rpm for 60 min to obtain premix d; carbohydrates are stirred at 30 rpm for 60 min to obtain premix e;
3) Premixes a, b, and c are mixed and stirred at 30 rpm for 45 min, followed by addition of premix d, and then stirred at 30 rpm for 45 min. Subsequently, fatty substances are added and stirred at 30 rpm for 45 min, and finally premix e is added and stirred at 30 rpm for 45 min, to obtain the nutritional composition.

The present invention also provides the use of the above nutritional composition in the manufacture of a food for improving the physical function of individuals with Alzheimer's disease or high-risk individuals.

Further, the food is a health food or dietary supplement.

The present invention also provides a method for treating and/or preventing Alzheimer's disease, which involves administering to patients with Alzheimer's disease or high-risk individuals the above nutritional composition.

The protein in the nutritional composition of the present invention is derived from various high-quality proteins such as whey protein, soy protein, and casein, providing different forms of nitrogen sources for the human body as well as aiding digestion and absorption. The composition incorporates dietary fibers from good sources such as oligofructose and oligogalactose, which aid in gastrointestinal peristalsis and prevent constipation. The composition also provides high-quality fats such as medium-chain triglycerides, which can be rapidly decomposed and digested in the intestine, with high absorption and utilization rates, complete metabolism, and rich in various unsaturated fatty acids such as linoleic acid and linolenic acid. Meanwhile, the composition incorporates lactoferrin components with various biological effects such as immune regulation, anti-inflammatory, antioxidant, and anti-apoptosis, which prevent and treat the occurrence and development of Alzheimer's disease by protecting AD neurons and inhibiting prion deposition in the brain. The specific function of each ingredient is shown in Table 1.

**Table 1. The function of each ingredient in the product.**

| No. | Name of ingredient | Function |
|---|---|---|
| 1 | Whey protein | Providing high-quality protein necessary for the human body |
| 2 | Casein | Providing high-quality protein necessary for the human body |
| 3 | Soybean protein | Providing high-quality protein necessary for the human body |
| 4 | Medium-chain triglycerides | Providing the fats and fatty acids necessary for the human body |
| 5 | Sunflower seed oil | Providing the fats and fatty acids necessary for the human body |
| 6 | Low erucic acid rapeseed oil | Providing the fats and fatty acids necessary for the human body |
| 7 | Maltodextrin | Providing carbohydrates |
| 8 | Corn syrup solid | Providing carbohydrates |
| 9 | Oligofructose | Providing water-soluble dietary fiber |
| 10 | Oligogalactose | Providing water-soluble dietary fiber |
| 11 | Copper sulfate | Providing copper, an essential element for the human body |
| 12 | Ferric pyrophosphate | Providing the essential elements iron and phosphorus needed by the human body |
| 13 | Manganese sulfate | Providing manganese, an essential element for the human body |
| 14 | Sodium selenite | Providing selenium, an essential element for the human body |
| 15 | Zinc citrate | Providing zinc, an essential element for the human body |
| 16 | Tricalcium phosphate | Providing the essential elements calcium and phosphorus needed by the human body |
| 17 | Calcium carbonate | Providing calcium, an essential element for the human body |
| 18 | Magnesium carbonate | Providing magnesium, an essential element for the human body |
| 19 | Potassium chloride | Providing the essential elements chlorine and potassium for the human body |
| 20 | Potassium citrate | Providing potassium, an essential element for the human body |
| 21 | Sodium citrate | Providing sodium, an essential element for the human body |
| 22 | Potassium iodide | Providing iodine, an essential element for the human body |
| 23 | Vitamin A palmitate | Providing the vitamins required by the human body |
| 24 | Cholecalciferol | Providing the vitamins required by the human body |
| 25 | dl-α-tocopheryl acetate | Providing the vitamins required by the human body |
| 26 | Phytonadione | Providing the vitamins required by the human body |
| 27 | Thiamine hydrochloride | Providing the vitamins required by the human body |
| 28 | Riboflavin | Providing the vitamins required by the human body |
| 29 | Pyridoxine hydrochloride | Providing the vitamins required by the human body |
| 30 | Cyanocobalamin | Providing the vitamins required by the human body |
| 31 | L-ascorbic acid sodium salt | Providing the vitamins required by the human body |
| 32 | Calcium D-pantothenate | Providing the vitamins required by the human body |
| 33 | Folic acid | Providing the vitamins required by the human body |
| 34 | Nicotinamide | Providing the vitamins required by the human body |
| 35 | D-biotin | Providing the vitamins required by the human body |
| 36 | Taurine | Improving endocrine status and enhancing human immunity |
| 37 | L-carnitine | Promoting fat metabolism and providing energy for bodily activities |
| 38 | Lactoferrin | Protecting AD neurons and inhibiting prion deposition |

Through preliminary experimental research, the composition of the present invention can effectively meet the physiological and nutritional needs of AD patients, significantly slow down the occurrence and progression of AD, and provide effective nutritional support for clinical patient rehabilitation. In the composition of the present invention, various components work together to have a significant impact on the absorption, utilization, and metabolism of the formulated nutrients within the organism. AD patients have a relatively weak capacity for protein synthesis and a lower level of essential amino acids in their plasma. Whey protein, casein, and soy protein in the formula are high-quality protein supplements, in which amino acids are rich and with appropriate ratios, and thus can be easily digested and absorbed. They feature low calorie, high satiety, and promote efficient absorption of minerals. Lipid substances can provide sufficient energy for the body, prevent damage to cells, and regulate brain function; fatty acids can directly or indirectly participate in processes such as synaptic development, neuronal growth, and gene expression related to proliferation in the body, and they have a significant regulatory effect on neuronal cell differentiation. Among them, polyunsaturated fatty acids are essential structural components for the central nervous system of the brain. Intake of sufficient polyunsaturated fatty acids can alter the expression state of several genes in the brain. Conversely, deficiency of polyunsaturated fatty acids in the human body can cause cognitive impairment. The medium-chain triglycerides, sunflower oil, and low erucic acid canola oil, added in the composition, can meet the essential fatty acid requirements of the human body. They are rich in various bioactive components that can reduce blood lipids and cholesterol, and improve lipid metabolism. The trace nutrients in the composition, such as B vitamins, are methyl donors for phospholipids in neuronal membranes, neurotransmitters, and DNA synthesis. Deficiency of B vitamins in the body will increase the incidence of hyperhomocysteinemia, thereby increasing the probability of damage to neuronal and vascular structures; vitamins C, E, and zinc are typical antioxidant nutrients that can play a significant neuroprotective role and effectively antagonize free radical oxidative damage. Lactoferrin exhibits various biological functions, including immunomodulation, anti-inflammatory, antioxidant, and anti-apoptotic effects, which contribute to alleviating cognitive function and serum Aβ levels in AD patients. The synergistic action of multiple nutrients in the composition can effectively slow down the occurrence and progression of AD.

Cellular and animal experiments have shown that the nutritional composition of the present invention is reasonably formulated and rich in high-quality animal and plant proteins, fatty acids, various vitamins, minerals, and water-soluble dietary fibers. It is easy to digest and absorb, and can be used as a single or partial nutritional source for nutritional supplementation. It has significant effects in improving the physical function of individuals with AD or high-risk groups, and in slowing down the occurrence and progression of AD. Therefore, it is suitable for consumption by individuals with AD or high-risk groups.

Obviously, based on the above content of the present invention, according to the common technical knowledge and the conventional means in the field, other various modifications, alternations, or changes can further be made, without department from the above basic technical spirits.

With reference to the following specific examples, the above content of the present invention is further illustrated. But it should not be construed that the scope of the above subject matter of the present invention is limited to the following examples. The techniques realized based on the above content of the present invention are all within the scope of the present invention.

### Description of Figures

Figure 1. The impact of different concentrations of Aβ25-35 on the viability of N2a cells after different intervention durations.
Figure 2. The impact of different protein components on the viability of AD model cells (* indicates P<0.05).
Figure 3. Index of novel object recognition ability in mice (* indicates P<0.05).
Figure 4. The open field activity of mice (a. Time spent by mice in the central area (* indicates P<0.05); b. Total distance traveled by mice (* indicates P<0.05)).
Figure 5. Activity of mice in the Morris water maze (a. Exploration time of mice in each quadrant (* indicates P<0.05), b. Representative spatial exploration trajectory in the Morris water maze).

### Examples

### Example 1 The full nutritional formula food of the present invention

Formula: 205 parts of proteinaceous substances, 223.6 parts of fatty substances, 450 parts of carbohydrates, 50 parts of dietary fiber substances, 1.8 parts of complexed trace minerals, 60 parts of complexed major minerals, 4 parts of multi-vitamins, 0.5 parts of taurine, 0.1 parts of L-camitine, and 1 part of lactoferrin;
wherein, the proteinaceous substances were composed of 25 parts of whey protein, 80 parts of soy protein, and 100 parts of casein;
the fatty substances were microcapsulated vegetable oil powders processed by microencapsulation using low erucic acid rapeseed oil, sunflower seed oil, medium chain triglycerides, and edible carriers as raw materials; 38 parts of medium chain triglycerides, 80 parts of sunflower seed oil, 45 parts of low erucic acid rapeseed oil were used, and the rest were edible carriers (a mixture of maltooligosaccharide, sodium caseinate, sodium tripolyphosphate, and vitamin E in a mass ratio of 90:38:2:0.6);
the carbohydrates were composed of 300 parts of maltodextrin and 150 parts of solid corn syrup;
the dietary fiber substances were composed of 20 parts of galactooligosaccharides and 30 parts of fructooligosaccharides;
the complexed trace minerals were composed of 0.02 parts of copper sulfate, 0.25 parts of ferric pyrophosphate, 0.03 parts of manganese sulfate, 0.0008 parts of sodium selenite, 0.15 parts of zinc citrate, 0.002 parts of potassium iodide, and the rest was maltodextrin as the carrier of complexed trace minerals;
the complexed major minerals were composed of 12 parts of tricalcium phosphate, 10 parts of calcium carbonate, 4 parts of magnesium carbonate, 7 parts of potassium chloride, 9 parts of potassium citrate, 15 parts of sodium citrate, and the rest was maltodextrin as the carrier of complexed major minerals;
multi-vitamins were composed of 1.3 parts of sodium L-ascorbate, 0.4 parts of dl-α-tocopheryl acetate, 0.15 parts of nicotinamide, 0.06 parts of calcium D-pantothenate, 0.02 parts of pyridoxine hydrochloride, 0.03 parts of thiamine hydrochloride, 0.02 parts of vitamin A palmitate, 0.02 parts of riboflavin, 0.002 parts of folic acid, 0.001 parts of phytomenadione, 0.0003 parts of D-biotin, 0.0002 parts of cholecalciferol, 0.00003 parts of cyanocobalamin, and the rest was maltodextrin as the carrier of multi-vitamins.

### Preparation method:

(1) Accurately weighing the raw and auxiliary materials
   Premix a: taurine, L-camitine, lactoferrin;
   Premix b: multi-vitamins, complexed trace minerals;
   Premix c: complexed major minerals, fructooligosaccharides, and galactooligosaccharides;
   Premix d: whey protein, casein, soy protein;
   Premix e: maltodextrin, solid corn syrup.
(2) Premixes a, b, c, d, and e
   The auxiliary materials of premix a were transferred to a three-dimensional motion mixer for mixing at 30 rpm, and stirred for 10 minutes to obtain premix a; the auxiliary materials of premix b were transferred to a three-dimensional motion mixer for mixing at 30 rpm, and stirred for 20 min to obtain premix b; the auxiliary materials of premix c were transferred to a three-dimensional motion mixer for mixing at 30 rpm, and stirred for 30 min to obtain premix c; the auxiliary materials of premix d were transferred to a three-dimensional motion mixer for mixing at 30 rpm, and stirred for 40 min to obtain premix d; the auxiliary materials of premix e were transferred to a three-dimensional motion mixer for mixing at 30 rpm, and stirred for 40 min to obtain premix e.
(3) Total mix
   Premixes a, b, and c were transferred to a three-dimensional motion mixer for mixing at 30 rpm, and stirred for 40 min; premix d was transferred to the three-dimensional motion mixer for mixing at 30 rpm, and stirred for 40 min; the microcapsulated vegetable oil powder was put into the mixer for mixing at 30 rpm, and stirred for 40 min; premix e was transferred to the three-dimensional motion mixer for mixing at 30 rpm, and stirred for 40 min, to obtain the finished product.
(4) Sub-packaging and packaging
   The mixed finished product was sub-packaged and packaged under sterile conditions.

The above procedures were carried out in a clean and dry environment that met the requirements of GB 14881 "National Food Safety Standard - General Hygiene Specification for Food Production".

The nutritional components contained in every 100 g of finished product are shown in Table 2.

**Table 2. The nutritional components contained in every 100 g of finished product.**

| Nutritional components | Content | Nutritional components | Content |
|---|---|---|---|
| Energy/KJ | 1884.16 | Vitamin B2/mg | 1.28 |
| Protein/g | 20.05 | Vitamin B6/mg | 1.48 |
| Fat/g | 16.42 | Vitamin B12/µg | 2.76 |
| Carbohydrate/g | 52.83 | Nicotinic acid /mg | 8.96 |
| Sodium/mg | 470.14 | Folic acid/µg | 182.00 |
| Calcium/mg | 857.11 | Pantothenic acid/mg | 4.00 |
| Phosphorus/mg | 291.22 | Vitamin C/mg | 80.00 |
| Magnesium /mg | 99.73 | Biotin/µg | 24.00 |
| Potassium /mg | 713.94 | Copper/µg | 450.08 |
| Chlorine/mg | 327.36 | Iron/mg | 6.28 |
| Linoleic acid/g | 5.09 | Zinc/mg | 4.28 |
| α-linolenic acid/mg | 755.77 | Manganese/µg | 900.00 |
| Dietary fiber/g | 4.43 | Iodine/µg | 96.00 |
| Vitamin A/µgRE | 640.00 | Selenium/µg | 31.50 |
| Vitamin D/µg | 8.80 | Taurine/mg | 46 |
| Vitamin E/mg α-TE | 35.58 | L-camitine/ mg | 10 |
| Vitamin K1/µg | 40.00 | Lactoferrin/mg | 88.36 |
| Vitamin B1/mg | 1.28 | | |

### Example 2 The full nutritional formula food of the present invention

Formula: 233 parts of proteinaceous substances, 150 parts of fatty substances, 520 parts of carbohydrates, 45 parts of dietary fiber substances, 2.5 parts of complexed trace minerals, 70 parts of complexed major minerals, 6 parts of multi-vitamins, 0.3 parts of taurine, 0.2 parts of L-camitine, and 0.9 part of lactoferrin;
wherein,
the proteinaceous substances were composed of 35 parts of whey protein, 37 parts of soy protein, and 161 parts of casein;
the fatty substances were microcapsulated vegetable oil powders processed by microencapsulation using low erucic acid rapeseed oil, sunflower seed oil, medium chain triglycerides, and edible carriers as raw materials; 30 parts of medium chain triglycerides, 50 parts of sunflower seed oil, 25 parts of low erucic acid rapeseed oil were used, and the rest were edible carriers (a mixture of maltooligosaccharide, sodium caseinate, sodium tripolyphosphate, and vitamin E in a mass ratio of 90:38:2:0.6);
the carbohydrates were composed of 400 parts of maltodextrin and 120 parts of solid corn syrup;
the dietary fiber substances were composed of 25 parts of galactooligosaccharides and 20 parts of fructooligosaccharides;
the complexed trace minerals were composed of 0.02 parts of copper sulfate, 0.3 parts of ferric pyrophosphate, 0.04 parts of manganese sulfate, 0.001 parts of sodium selenite, 0.2 parts of zinc citrate, 0.0025 parts of potassium iodide, and the rest was maltodextrin as the carrier of complexed trace minerals;
the complexed major minerals were composed of 12 parts of tricalcium phosphate, 14 parts of calcium carbonate, 4 parts of magnesium carbonate, 9 parts of potassium chloride, 10 parts of potassium citrate, 15 parts of sodium citrate, and the rest was maltodextrin as the carrier of complexed major minerals;
multi-vitamins were composed of 2 parts of sodium L-ascorbate, 0.5 parts of dl-α-tocopheryl acetate, 0.2 parts of nicotinamide, 0.1 parts of calcium D-pantothenate, 0.03 parts of pyridoxine hydrochloride, 0.04 parts of thiamine hydrochloride, 0.03 parts of vitamin A palmitate, 0.03 parts of riboflavin, 0.004 parts of folic acid, 0.002 parts of phytomenadione, 0.0003 parts of D-biotin, 0.0003 parts of cholecalciferol, 0.00005 parts of cyanocobalamin, and the rest was maltodextrin as the carrier of multi-vitamins.

### Preparation method:

(1) Accurately weighing the raw and auxiliary materials
   Premix a: taurine, L-camitine, lactoferrin;
   Premix b: multi-vitamins, complexed trace minerals;
   Premix c: complexed major minerals, fructooligosaccharides, and galactooligosaccharides;
   Premix d: whey protein, casein, soy protein;
   Premix e: maltodextrin, solid corn syrup.
(2) Premixes a, b, c, d, and e
   The auxiliary materials of premix a were transferred to a three-dimensional motion mixer for mixing at 30 rpm, and stirred for 15 min to obtain premix a; the auxiliary materials of premix b were transferred to a three-dimensional motion mixer for mixing at 30 rpm, and stirred for 30 min to obtain premix b; the auxiliary materials of premix c were transferred to a three-dimensional motion mixer for mixing at 30 rpm, and stirred for 40 min to obtain premix c; the auxiliary materials of premix d were transferred to a three-dimensional motion mixer for mixing at 30 rpm, and stirred for 60 min to obtain premix d; the auxiliary materials of premix e were transferred to a three-dimensional motion mixer for mixing at 30 rpm, and stirred for 60 min to obtain premix e.
(3) Total mix
   Premixes a, b, and c were transferred to a three-dimensional motion mixer for mixing at 30 rpm, and stirred for 45 min; premix d was transferred to the three-dimensional motion mixer for mixing at 30 rpm, and stirred for 45 min; the microcapsulated vegetable oil powder was put into the mixer for mixing at 30 rpm, and stirred for 45 min; premix e was transferred to the three-dimensional motion mixer for mixing at 30 rpm, and stirred for 45 min, to obtain the finished product.
(4) Sub-packaging and packaging
   The mixed finished product was sub-packaged and packaged under sterile conditions.

The above procedures were carried out in a clean and dry environment that met the requirements of GB 14881 "National Food Safety Standard - General Hygiene Specification for Food Production".

### Example 3 The full nutritional formula food of the present invention

Formula: 182 parts of proteinaceous substances, 1112.6 parts of fatty substances, 580 parts of carbohydrates, 70 parts of dietary fiber substances, 2.2 parts of complexed trace minerals, 80 parts of complexed major minerals, 3.5 parts of multi-vitamins, 0.4 parts of taurine, 0.3 parts of L-camitine, and 0.95 part of lactoferrin;
the proteinaceous substances were composed of 15 parts of whey protein, 87 parts of soy protein, and 80 parts of casein;
the fatty substances were microcapsulated vegetable oil powders processed by microencapsulation using low erucic acid rapeseed oil, sunflower seed oil, medium chain triglycerides, and edible carriers as raw materials; 18 parts of medium chain triglycerides, 45 parts of sunflower seed oil, 22 parts of low erucic acid rapeseed oil were used, and the rest were edible carriers (a mixture of maltooligosaccharide, sodium caseinate, sodium tripolyphosphate, and vitamin E in a mass ratio of 90:38:2:0.6);
the carbohydrates were composed of 380 parts of maltodextrin and 200 parts of solid corn syrup;
the dietary fiber substances were composed of 50 parts of galactooligosaccharides and 20 parts of fructooligosaccharides;
the complexed trace minerals were composed of 0.02 parts of copper sulfate, 0.35 parts of ferric pyrophosphate, 0.04 parts of manganese sulfate, 0.001 parts of sodium selenite, 0.2 parts of zinc citrate, 0.0015 parts of potassium iodide, and the rest was maltodextrin as the carrier of complexed trace minerals;
the complexed major minerals were composed of 16 parts of tricalcium phosphate, 14 parts of calcium carbonate, 6 parts of magnesium carbonate, 10 parts of potassium chloride, 11 parts of potassium citrate, 16 parts of sodium citrate, and the rest was maltodextrin as the carrier of complexed major minerals;
multi-vitamins were composed of 1.0 parts of sodium L-ascorbate, 0.3 parts of dl-α-tocopheryl acetate, 0.15 parts of nicotinamide, 0.07 parts of calcium D-pantothenate, 0.018 parts of pyridoxine hydrochloride, 0.03 parts of thiamine hydrochloride, 0.018 parts of vitamin A palmitate, 0.03 parts of riboflavin, 0.004 parts of folic acid, 0.0009 parts ofphytomenadione, 0.0002 parts of D-biotin, 0.0001 parts of cholecalciferol, 0.00003 parts of cyanocobalamin, and the rest was maltodextrin as the carrier of multi-vitamins.

### Preparation method:

(1) Accurately weighing the raw and auxiliary materials
   Premix a: taurine, L-camitine, lactoferrin;
   Premix b: multi-vitamins, complexed trace minerals;
   Premix c: complexed major minerals, fructooligosaccharides, and galactooligosaccharides;
   Premix d: whey protein, casein, soy protein;
   Premix e: maltodextrin, solid corn syrup.
(2) Premixes a, b, c, d, and e
   The auxiliary materials of premix a were transferred to a three-dimensional motion mixer for mixing at 50 rpm, and stirred for 10 min to obtain premix a; the auxiliary materials of premix b were transferred to a three-dimensional motion mixer for mixing at 50 rpm, and stirred for 20 min to obtain premix b; the auxiliary materials of premix c were transferred to a three-dimensional motion mixer for mixing at 50 rpm, and stirred for 30 min to obtain premix c; the auxiliary materials of premix d were transferred to a three-dimensional motion mixer for mixing at 50 rpm, and stirred for 40 min to obtain premix d; the auxiliary materials of premix e were transferred to a three-dimensional motion mixer for mixing at 50 rpm, and stirred for 40 min to obtain premix e.
(3) Total mix
   Premixes a, b, and c were transferred to a three-dimensional motion mixer for mixing at 50 rpm, and stirred for 40 min; premix d was transferred to the three-dimensional motion mixer for mixing at 50 rpm, and stirred for 40 min; the microcapsulated vegetable oil powder was put into the mixer for mixing at 50 rpm, and stirred for 40 min; premix e was transferred to the three-dimensional motion mixer for mixing at 50 rpm, and stirred for 40 min, to obtain the finished product.
(4) Sub-packaging and packaging
   The mixed finished product was sub-packaged and packaged under sterile conditions.

The above procedures were carried out in a clean and dry environment that met the requirements of GB 14881 "National Food Safety Standard - General Hygiene Specification for Food Production".

### Comparative example 1

Other conditions and steps were the same as those in Example 1, with the difference being that lactoferrin was not added.

### Comparative example 2

Other conditions and steps were the same as those in Example 1, with the difference being that the amount of whey protein was changed to 9 parts, and the amount of lactoferrin was changed to 0.6 parts.

### Comparative example 3

Other conditions and steps were the same as those in Example 1, with the difference being that the amount of soy protein was changed to 11 parts, and the amount of casein was changed to 62 parts.

### Comparative example 4

Other conditions and steps were the same as those in Example 1, with the difference being that the amount of whey protein was changed to 12 parts, the amount of soy protein was changed to 32 parts, and the amount of casein was changed to 41 parts.

### Comparative example 5

Other conditions and steps were the same as those in Example 1, with the difference being that the amount of whey protein was changed to 11 parts, the amount of soy protein was changed to 80 parts, the amount of casein was changed to 30 parts, and the amount of lactoferrin was changed to 0.6 parts.

**The beneficial effects of the present invention were illustrated with reference to the following experimental examples:**

### Experimental example 1 Effect test of protein in formula

### 1. Full nutritional formula for experimentation

Group A: 26 parts of whey protein, 142 parts of casein, 66 parts of soy protein, and 0.95 parts of lactoferrin.

Group B: 19 parts of whey protein, 119 parts of casein, 77 parts of soy protein, and 0.9 parts of lactoferrin.

Group C: The addition amounts of casein, soy protein, and lactoferrin were the same as those in Group A, while the amount of whey protein was changed to 9 parts.

Group D: The addition amounts of whey protein, soy protein, and lactoferrin were the same as those in Group A, while the amount of casein was changed to 42 parts.

Group E: The addition amounts of whey protein, casein, and lactoferrin were the same as those in group A, while the amount of soy protein was changed to 14 parts.

Group F: The addition amounts of whey protein, casein, and soy protein were the same as those in group A, while the amount of lactoferrin was changed to 0.4 parts.

Group G: The amount of whey protein was changed to 7 parts, the amount of casein was changed to 195 parts, the amount of soy protein was changed to 92 parts, and the amount of lactoferrin was changed to 0.4 parts.

Group H: The amount of whey protein was changed to 49 parts, the amount of casein was changed to 14 parts, the amount of soy protein was changed to 113 parts, and the amount of lactoferrin was changed to 0.8 parts.

### 2. AD cell model for experimentation

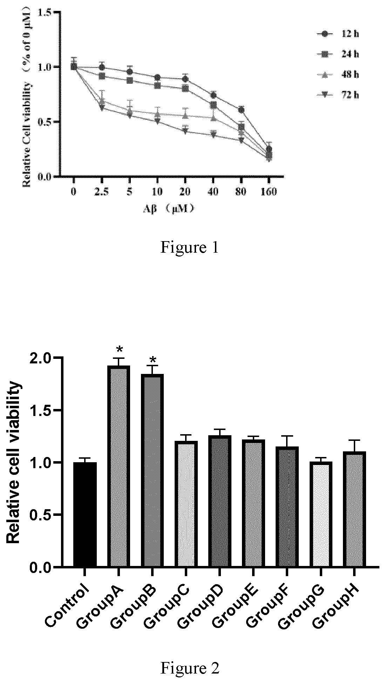

After treating N2a cells with Aβ25-35 at different concentrations (0, 2.5, 5, 10, 20, 40, 80, 160 µmol/L) for 12 h, 24 h, 48 h, and 72 h, cell viability was assessed using the CCK-8 method. As shown in Figure 1, cell viability gradually decreased with increasing Aβ25-35 intervention concentration and treatment duration. When the concentration of Aβ25-35 was 20 µmol/L and the intervention time was 24 h, cell viability was approximately 80%. Therefore, the intervention with 20 µmol/L Aβ25-35 for 24 h was selected to establish an AD cell model.

### 3. Method

The AD cell model was treated with the nutritional formulas of the above eight protein groups. Specifically, eight protein groups were prepared in a cell culture medium containing 10% FBS to achieve a final concentration of 40 µg/ml. The AD model cells were then incubated with the pre-prepared protein group media for 24 h. The cell viability was subsequently assessed using the CCK-8 method. As shown in Figure 2, compared to the control group (cultured in normal serum without protein group intervention), cell viability significantly increased after treatment with protein groups A and B (*P* < 0.05), while cell viability slightly increased after treatment with protein groups C, D, E, F, G, and H, but the differences were not statistically significant (P > 0.05). The results indicated that lactoferrin and proteins (whey protein, casein, soy protein) all played important roles in improving cell viability. However, when the proportion of any protein exceeded a certain range, it did not have a substantial effect on cell viability improvement.

### Experimental example 2: Formula comparison test

The cognitive function enhancement effect of formula foods prepared according to Examples 1-3 and Comparative Examples 1-5 on mice was tested. The steps involved were as follows:
64 male APPswe/PS1ΔE9 double transgenic AD model mice were selected for the experiment, with 10 littermate B6C3 wild-type (WT) mice serving as controls. The mice were housed individually in cages under barrier conditions and acclimated for one week. Subsequently, the APP/PS1 mice were randomly divided into 8 groups. Mice in experimental groups 1-8 were sequentially administered with the full nutritional formulas prepared according to Examples 1-3 of the present invention and Comparative Examples 1-5, respectively. Mice in the WT control group were gavaged with physiological saline. During the experiment, the mice had free access to water and food except for the gavage samples, and were continuously fed for 24 weeks.

### Detection indicators:

(1) Changes in mouse body weight: After a week of adaptive feeding, the average body weight of mice in each group was recorded. After observing the changes in mouse body weight, the gavage dose was determined based on the mouse body weight. The dose for the full nutritional formula and physiological saline was 1.7 g/(kg•d).
(2) The novel object recognition (NOR) test

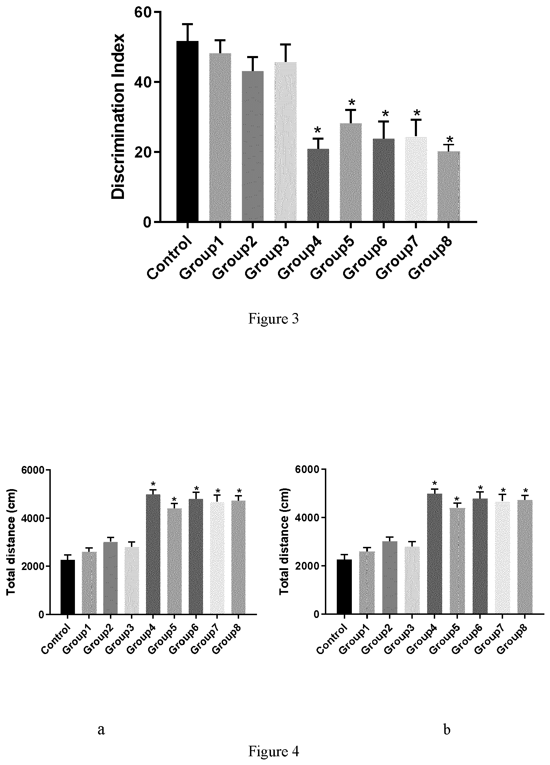

NOR was primarily used to evaluate short-term cognitive function. A test chamber, measuring 45 cm in length, 30 cm in width, and 20 cm in height, was set up in a spacious, quiet, and evenly lit room, with its surroundings opaque. Two objects of similar size and shape but different colors were selected for the test, and the mice exhibited similar preferences for these two objects. NOR could assess the learning ability of mice by comparing their preference levels and exploration times for new and old objects. The results are shown in Figure 3 below. Compared with the WT control group, the mice in experimental groups 4-8 (using the nutritional formulas prepared in Comparative Examples 1-5) significantly shortened the time spent exploring new objects, manifested as a decrease in the recognition index. Although the recognition index of mice in experimental groups 1-3 (using the nutritional formulas prepared in Examples 1-3) slightly decreased, there was no statistical difference. This indicated that Examples 1-3 could improve the learning ability of AD model mice.

### (3) Open field test (OFT)

OFT was a method for evaluating the spontaneous motor activity and exploratory behavior of animals, which was widely used in the field of psychiatry. By placing mice in an open field response chamber as well as observing their movement trajectory, distance, and other indicators within a specified time period, the anxiety level and exploration ability of the mice were measured. The spontaneous exploration abilities of mice in each group are shown in Figures 4a and 4b. Compared with the WT control group, the experimental groups 4-8 showed a significant decrease in the duration of stay in the central area and the number of times they entered the central area, but a significant increase in movement distance and average movement rate (*P <* 0.05), indicating significant anxiety in the mice. However, there was no significant difference (*P* > 0.05) in the duration of stay in the central area, the number of times the mice entered the central area, and the average movement rate for experimental groups 1-3, indicating that Examples 1-3 could improve the spontaneous exploration ability of AD model mice.

### (4) Morris water maze (MWZ)

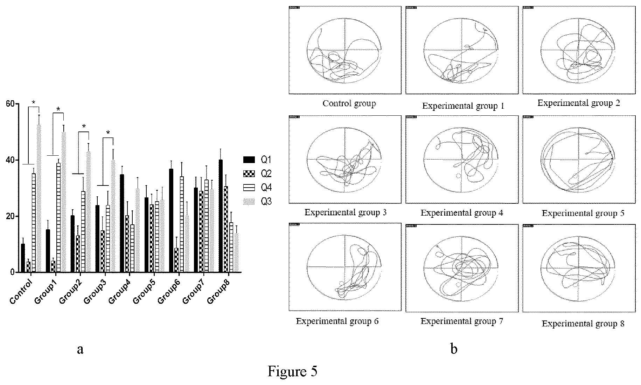

The internationally recognized MWZ test was used to assess the learning and memory abilities of mice in spatial location. Based on the instinct of mice to seek a resting place in water, this process involved complex learning processes such as collecting visual information related to spatial orientation, processing, integrating, and remembering the information. As shown in Figure 5a, compared with the WT control group, the exploration time of mice in experimental groups 4-8 in the target quadrant was significantly reduced (*P* < 0.05); however, there was no significant difference in the time spent in the target quadrant for mice in experimental groups 1-3 (*P >* 0.05). This indicated that Examples 1-3 could improve the spatial memory ability of AD model mice. As shown in Figure 5b, based on the typical movement trajectory maps of mice in each group, mice in experimental groups 4-8 exhibited search behavior for the platform after its removal, but showed no obvious tendency to search in any quadrant, and the number of times they crossed the platform was significantly lower than that of mice in WT control group; while mice in experimental groups 1-3 showed enhanced search behavior and increased tendency towards the target quadrant, with their movement trajectories being basically similar to those of WT mice.

In summary, the nutritional composition of the present invention was reasonably formulated and rich in high-quality animal and plant proteins, fatty acids, various vitamins, minerals, and water-soluble dietary fibers. It was easy to digest and absorb, and could be used as a single or partial nutritional source for nutritional supplementation. It had significant effects in improving the physical function of individuals with AD or high-risk groups, and in slowing down the occurrence and progression of AD. Therefore, it was suitable for consumption by individuals with AD or high-risk groups.

## Claims

1. A nutritional composition for individuals with Alzheimer's disease or those at high risk, **characterized in that** it is prepared from the following raw materials according to the indicated mass ratios: 170-300 parts of proteinaceous substances, 85-250 parts of fatty substances, 450-770 parts of carbohydrates, 10-155 parts of dietary fiber substances, 1.2-3.5 parts of trace minerals, 47-180 parts of major minerals, 2.0-8.3 parts of vitamins, 0.1-1.0 parts of taurine, 0.05-0.5 parts of L-carnitine, and 0.9-1.0 parts of lactoferrin.

2. The nutritional composition according to claim 1, **characterized in that** the proteinaceous substances include any one or more of whey protein, soy protein, and casein;
the fatty substances include any one or more of rapeseed oil, sunflower seed oil, and medium-chain triglycerides; the rapeseed oil is low erucic acid rapeseed oil.

3. The nutritional composition according to claim 1, **characterized in that** the dietary fiber substances include galactooligosaccharides and/or fructooligosaccharides;
the carbohydrates include maltodextrin and/or corn syrup; the corn syrup is solid corn syrup.

4. The nutritional composition according to claim 1, **characterized in that** the trace minerals include any one or more of copper sulfate, ferric pyrophosphate, manganese sulfate, sodium selenite, zinc citrate, and potassium iodide;
the major minerals include any one or more of tricalcium phosphate, calcium carbonate, magnesium carbonate, potassium chloride, potassium citrate, and sodium citrate.

5. The nutritional composition according to claim 1, **characterized in that** the vitamins include any one or more of L-ascorbic acid sodium salt, dl-α-tocopheryl acetate, niacinamide, calcium D-pantothenate, pyridoxine hydrochloride, thiamine hydrochloride, vitamin A palmitate, riboflavin, folic acid, phytomenadione, D-biotin, cholecalciferol, and cyanocobalamin.

6. The nutritional composition according to any one of claims 1 to 5, **characterized in that** it is prepared from following raw materials in the indicated mass ratios:
190-240 parts of proteinaceous substances, 110-250 parts of fatty substances, 450-580 parts of carbohydrates, 40-80 parts of dietary fiber substances, 1.5-3.0 parts of trace minerals, 50-100 parts of major minerals, 3-7 parts of vitamins, 0.2-0.6 parts of taurine, 0.1-0.3 parts of L-camitine, and 0.9-1.0 parts of lactoferrin;
the protein substance is composed of whey protein, soy protein, and casein in a mass ratio of 15-35:37-90:80-161;
the fatty substance is the microcapsulated vegetable oil powder made from low erucic acid canola oil, sunflower oil, medium chain triglycerides, and edible carriers in a mass ratio of 22-45:45-80:18-38:25-65;
the carbohydrate is composed of maltodextrin and solid corn syrup in a mass ratio of 300-400:120-200;
the dietary fiber substance is composed of galactooligosaccharides and fructooligosaccharides in a mass ratio of 20-50:20-30;
the trace minerals are composed of copper sulfate, ferric pyrophosphate, manganese sulfate, sodium selenite, zinc citrate, potassium iodide, and edible carriers in a mass ratio of 0.02:0.25-0.35:0.03-0.04:0.0008-0.001:0.15-0.2:0.0015-0.0025:1.3-2.0;
the major minerals are composed of tricalcium phosphate, calcium carbonate, magnesium carbonate, potassium chloride, potassium citrate, sodium citrate, and edible carriers in a mass ratio of 12-16:10-14:4-6:7-10:9-11:15-16:3-7;
the vitamins are composed of L-ascorbic acid sodium salt, dl-α-tocopheryl acetate, niacinamide, calcium D-pantothenate, pyridoxine hydrochloride, thiamine hydrochloride, vitamin A palmitate, riboflavin, folic acid, phytomenadione, D-biotin, cholecalciferol, cyanocobalamin, and edible carriers in a mass ratio of 1-2:0.3-0.4:0.15-0.2:0.06-0.1:0.018-0.03:0.03-0.04:0.018-0.03:0.02-0.03:0.002-0.004:0.0009-0. 001:0.0002-0.0003:0.0001-0.0003:0.00003-0.00005:1.5-4.

7. The nutritional composition according to claim 6, **characterized in that** it is prepared from following raw materials in the indicated mass ratios:
205 parts of proteinaceous substances, 223.6 parts of fatty substances, 450 parts of carbohydrates, 50 parts of dietary fiber substances, 1.8 parts of trace minerals, 60 parts of major minerals, 4 parts of vitamins, 0.5 parts of taurine, 0.1 parts of L-carnitine, and 1.0 parts of lactoferrin;
the protein substance is composed of whey protein, soy protein, and casein in a mass ratio of 25:80:100;
the fatty substance is the microcapsulated vegetable oil powder made from low erucic acid canola oil, sunflower oil, medium chain triglycerides, and edible carriers in a mass ratio of 45: 80: 38:60.6;
the carbohydrate is composed of maltodextrin and solid corn syrup in a mass ratio of 300:150;
the dietary fiber substance is composed of galactooligosaccharides and fructooligosaccharides in a mass ratio of 20:30;
the trace minerals are composed of copper sulfate, ferric pyrophosphate, manganese sulfate, sodium selenite, zinc citrate, potassium iodide, and edible carriers in a mass ratio of 0.02:0.25:0.03:0.0008:0.15:0.002:1.3;
the major minerals are composed of tricalcium phosphate, calcium carbonate, magnesium carbonate, potassium chloride, potassium citrate, sodium citrate, and edible carriers in a mass ratio of 12:10:4:7:9:15:3;
the vitamins are composed of L-ascorbic acid sodium salt, dl-α-tocopheryl acetate, niacinamide, calcium D-pantothenate, pyridoxine hydrochloride, thiamine hydrochloride, vitamin A palmitate, riboflavin, folic acid, phytomenadione, D-biotin, cholecalciferol, cyanocobalamin, and edible carriers in a mass ratio of 1.3:0.4:0.15:0.06:0.02:0.03:0.02:0.02:0.002:0.001:0.0003:0.0002:0.00003:2.0.

8. A method for preparing the nutritional composition according to any one of claims 1-7, **characterized in that** it comprises the following steps:
1) The raw materials are weighed according to the pre-determined ratio;
2) Taurine, L-camitine, and lactoferrin are mixed and stirred at 30 rpm for 15 min to obtain premix a; vitamins and trace minerals are mixed and stirred at 30 rpm for 30 min to obtain premix b; major minerals and dietary fiber substances are mixed and stirred at 30 rpm for 40 min to obtain premix c; proteinaceous substances are stirred at 30 rpm for 60 min to obtain premix d; carbohydrates are stirred at 30 rpm for 60 min to obtain premix e;
3) Premixes a, b, and c are mixed and stirred at 30 rpm for 45 min, followed by addition of premix d, and then stirred at 30 rpm for 45 min. Subsequently, fatty substances are added and stirred at 30 rpm for 45 min, and finally premix e is added and stirred at 30 rpm for 45 min, to obtain the nutritional composition.

9. The use of the nutritional composition according to any one of claims 1 to 7 in the manufacture of a food for improving the physical function of individuals with Alzheimer's disease or high-risk individuals.

10. The use according to claim 9, **characterized in that** the food is a health food or dietary supplement.

11. A method for treating and/or preventing Alzheimer's disease, **characterized in that** it involves administering to patients with Alzheimer's disease or high-risk individuals a nutritional composition according to any one of claims 1 to 7.
